# FASCICULE DE BREVET EUROPEEN

(11) **EP 1 873 061 B1**
(45) Date de publication et mention de la délivrance du brevet: **06.04.2016**
(21) Numéro de dépôt: 07110965.6
(22) Date de dépôt: 25.06.2007
(51) Int. Cl.: B64G 1/22, B64G 1/66, H01Q 15/16, B64G 1/44

(54) **Structure déployable comportant des éléments rigides, embarquée sur un engin spatial**
Entfaltbare Struktur, die starre Elemente umfasst und auf einem Raumflugkörper untergebracht ist
Retractable structure comprising rigid elements on board a spacecraft

(30) Priorité: 27.06.2006 FR 0652669
(43) Date de publication de la demande: 02.01.2008
(73) Titulaire: Thales, 92400 Courbevoie (FR)
(72) Inventeur: Baudasse, Yannick, 06130 Grasse (FR)
(74) Mandataire: Esselin, Sophie

(56) Documents cités:
- EP-A2- 0 184 330
- EP-A2- 1 391 766
- FR-A1- 2 526 986
- US-A- 3 606 211
- US-A- 4 315 265
- US-A- 4 646 102
- US-A- 5 257 034

## Description

Le domaine de l'invention est celui des structures déployables embarquées à bord d'un satellite et notamment des écrans thermiques destinés à venir protéger du rayonnement solaire, l'ensemble des composants. De manière générale, qu'il s'agisse de grand écran thermique ou de tout dispositif destiné à être déployé dans l'espace, type antenne au bout d'un mât, la problématique de stockage est la même. Il est impératif de stocker la structure déployable dans un volume imposé et ce de manière contrainte pour résister à la phase de lancement, avant de procéder à l'opération de déploiement en milieu spatial.

De manière schématique, le volume tubique imposé de stockage se situe entre celui de la structure satellite cylindrique (interne), et celui de la coiffe lanceur (externe).

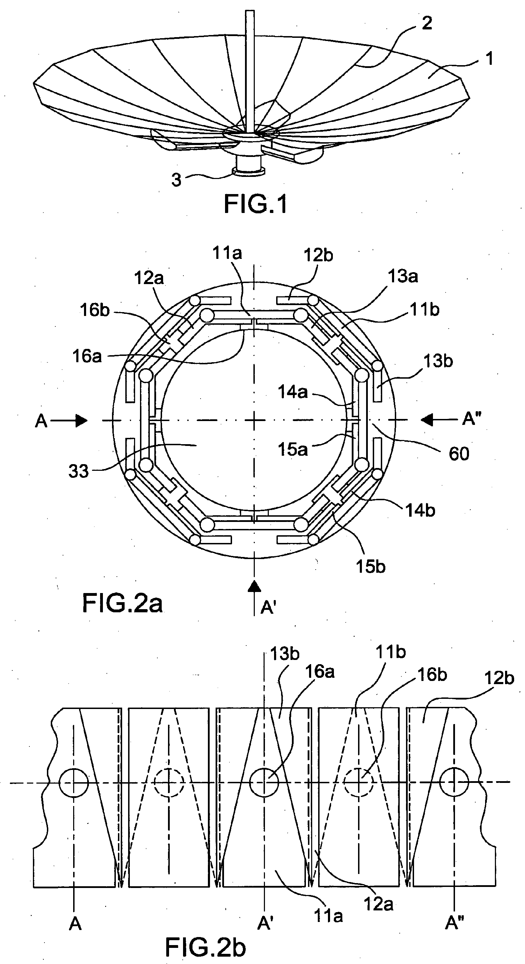

Dans le cas d'écran thermique et selon l'art connu, l'écran thermique à déployer peut être constitué de panneaux souples 1 montés sur une armature rigide 2 de type parasol comme illustré en figure 1, ladite structure déployable étant fixée sur la structure cylindrique centrale 3, qui permet le stockage de panneaux de grandes dimensions. Typiquement, dans une coiffe lanceur ( non représentée en figure 1) de 3 mètres de diamètre, on peut chercher à stocker des panneaux pouvant atteindre 9 à 10 mètres d'envergure. Néanmoins l'utilisation de structure souple pose le problème de la cinématique lors du déploiement et de sa mise en tension. Des risques de déchirement combinés à une motorisation importante pour la mise en tension des panneaux souples rendent l'usage de structure souple relativement fragile et complexe. De plus, la surface déployée des panneaux souples peut poser un autre type de problème, car un déploiement conduisant à des panneaux non parfaitement tendus peut créer des températures hétérogènes, et des concentrations locales indésirables pour le bon fonctionnement d'un écran solaire.

Une alternative à l'utilisation de panneaux souples est l'utilisation de panneaux rigides, cependant le stockage de tels panneaux rigides dans le faible volume disponible entre, structure satellite et coiffe demeure un problème.

Le document US 4,646,102 décrit les caractéristiques du préambule de la revendication 1.

Dans ce contexte, la présente invention a pour objet une structure déployable comportant au moins un module rigide agencé et maintenu de manière astucieuse en position de stockage et facilement déployable.

Plus précisément l'invention a pour objet une structure déployable embarquable à bord d'un engin spatial comprenant une structure satellite centrale, ladite structure comportant au moins un module comprenant des éléments unitaires rigides et équipé à son emplanture sur la structure satellite centrale d'une articulation permettant le déploiement dudit module, caractérisée en ce que le module comprend des moyens de maintien en position de repli des éléments unitaires autour de ladite structure satellite en position de stockage et des moyens guidants et motorisants les maintenant entre eux en position déployée.

Selon l'invention, les moyens de maintien en position de repli comprennent au moins un point de gerbage solidarisant au moins un des éléments unitaires à la structure centrale, ledit point de gerbage étant actionnable de manière à pouvoir libérer ledit élément unitaire en cours de déploiement de la structure.

Selon une variante de l'invention, le point de gerbage comprend un composant de maintien du type « écrou pyrotechnique » ou coupe tirant ou « écrou low shock ».

Selon l'invention, la structure comprend un ensemble de modules comportant chacun des panneaux comprenant une partie principale centrale et deux parties latérales, seules les parties principales centrales étant fixées à la structure centrale et définissant une ligne d'articulation et de déploiement autour de ladite structure centrale.

Selon une variante de l'invention, lesdites parties latérales sont reliées à la partie principale par les moyens guidants et motorisants de manière à assurer un déploiement secondaire dans une direction quelconque par rapport à l'axe de la structure centrale.

Selon l'invention, les moyens de repli sont des leviers de stockage interposés entre les parties principales centrales et les points de gerbage en position de stockage.

Selon une variante de l'invention, les moyens guidants et motorisants comprennent d'une part des lames de motorisation et d'autre part des cables de maintien pour relier indépendament la partie centrale aux deux parties latérales.

Selon l'invention, la structure déployable comprend au moins un premier et un second niveaux périphériques d'éléments unitaires, une partie centrale d'un élément unitaire du premier niveau étant relié par un point de gerbage à deux parties latérales d'un élément unitaire du second niveau.

Selon une variante de l'invention, la structure déployable comprend un module comportant plusieurs éléments unitaires et des moyens de déploiement périphérique autour de la structure centrale.

L'invention sera mieux comprise et d'autres avantages apparaitront à la lecture de la description qui va suivre donnée à titre non limitatif et grâce aux figures annéxées parmi lesquelles
- la figure 1 schématise un exemple de structure déployable de type écran solaire selon l' art connu ;
- les figures 2a et 2b illustrent une première variante de l'invention dans laquelle la structure déployable est un écran solaire ;
- les figures 3a et 3b schématisent la structure centrale munie de la structure déployable de type écran solaire respectivement en position de stockage et en position partiellement déployée, selon l'invention ;
- la figure 4 illustre le mouvement des leviers permettant le déploiement et le maintien des panneaux latéraux dans un exemple de structure déployable de type écran solaire, selon l'invention ;
- les figures 5a et 5b illustrent un exemple de panneaux rigides utilisés dans une structure déployable de type écran solaire selon l'invention, respectivement en position de stockage et en position déployée ;
- La figure 6 illustre une vue de dessus d'un exemple de panneau central relié à deux panneaux latéraux utilisés dans un exemple de structure déployable de type écran solaire, selon l'invention ;
- la figure 7 illustre une vue en coupe d'un exemple de moyen d'articulation reliant le panneau central à la structure centrale utilisé dans une structure déployable de type écran solaire selon l'invention ;
- les figures 8a et 8b illustrent un second exemple de structure déployable selon l'invention comportant un mât à déployer, respectivement en position de stockage et en position déployée.

Selon une première variante de l'invention, la structure déployable peut être de type écran solaire, embarquée sur un satellite.

Plus précisément et selon l'invention, la structure déployable comprend différents modules. Chaque module est constitué :
▪ D'un panneau central, équipé à son emplanture d'une ligne d'articulation de déploiement, elle même fixée sur la structure satellite centrale,
▪ De deux parties latérales permettant de réaliser la jonction inter-modules une fois la structure totalement déployée.

Les différents modules sont stockés les uns sur les autres à la périphérie de la structure cylindrique. Pour plus de détails, un exemple d'assemblage de deux niveaux de panneaux est illustré en figures 2a (vue perpendiculaire à l' axe de la structure cylindrique) et 2b (une vue développée de la périphérie (suivant A/A'/A") de la structure cylindrique).

Comme illustré en figure 2a, un premier niveau est constitué par des panneaux internes centraux 11a et des panneaux internes latéraux 12a et 13a. Les panneaux internes centraux 11 a sont reliés à la structure cylindrique centrale 33 par des premiers pieds de gerbage 16a.

Un second niveau est constitué par des panneaux externes centraux 11 b et des panneaux externes latéraux 12b et 13b. Les panneaux externes centraux 11b sont reliés à la structure cylindrique centrale 33 par des premiers pieds de gerbage 16b.

Par ailleurs, chaque ensemble constitué par un panneau central et des panneaux latéraux comprennent également des paires de leviers respectivement 14 et 15, solidaires des panneaux latéraux, et permettant de maintenir replié ces derniers en position stockée dans le volume alloué 60, compris entre la structure satellite et la coiffe. Pour permettre la libération des différents modules, et suivant leur agencement autour de la structure 33, les pieds de gerbage sont équipés de moyens individuels commandables, permettant de libérer les panneaux ensemble, par groupes, ou un par un, d'une manière séquencée.

Ces moyens peuvent être notamment des écrous pyrotechniques.

La superposition des panneaux 11a,12a,13a et des panneaux 11b,12b,13b et des points de gerbage 16a et 16b est mise en évidence en figure 2b.

Lors de la phase de déploiement, on libère dans un premier temps, les points de gerbage 16b , ce qui conduit à déployer le niveau extérieur des panneaux centraux 11 b selon une première direction radiale par rapport à la structure cylindrique centrale, en même temps que les leviers 14b et 15b libèrent les panneaux latéraux 12b et 13b.

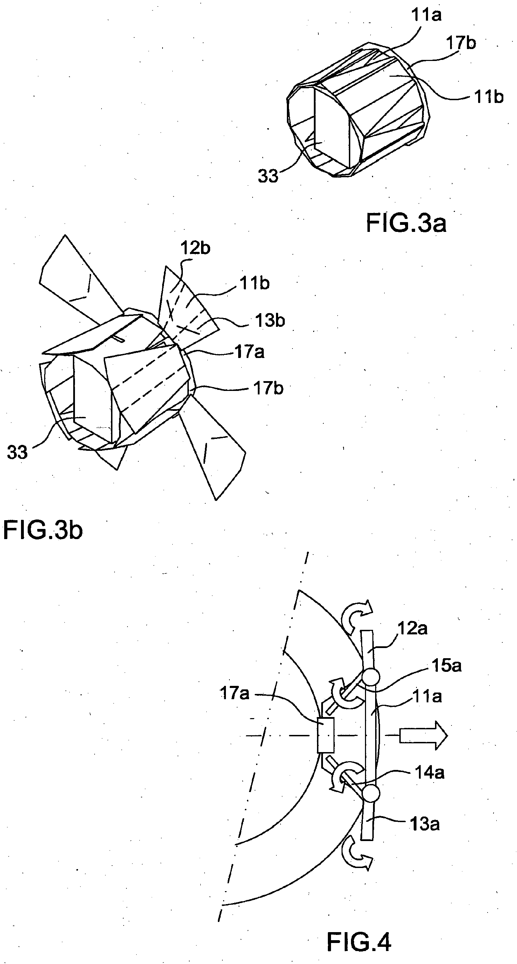

Pour illustrer cette configuration de déploiement, la figure 3a montre la structure cylindrique centrale équipée de l'ensemble replié en position de stockage des panneaux de premier niveau 11a (avec leurs parties associées 12a, 13a, 14a et 15a) et des panneaux de niveau extérieur 11 b (avec leurs parties associées 12b, 13b, 14b et 15b). La figure 3b montre la structure cylindrique autour de laquelle seul le niveau extérieur de panneaux 11 b avec leurs parties latérales associées 12b, 13b, 14b et 15b, est déployé, correspondant à la première étape de l'opération de déploiement.

Dans un second temps, les points de gerbage 16a sont libérés et les panneaux centraux 11 a sont déployés de manière radiale, alors que les panneaux latéraux 12a et 13a peuvent simultanément être libérés, cette seconde étape est illustrée plus en détails en figure 4 qui montre le mouvement effectué par les leviers 14a et 15a lors de la libération des parties latérales 12a et 13a correspondant à un module de premier niveau. Le panneau libéré est alors uniquement solidaire de la structure cylindrique centrale de manière flexible grâce à une articulation 17a. Après l'ensemble des opérations de libération des points de gerbages on reconstitue un écran solaire composé uniquement de panneaux rigides stockés de manière astucieuse et assurant une surface continue de protection vis à vis de l'éclairement solaire.

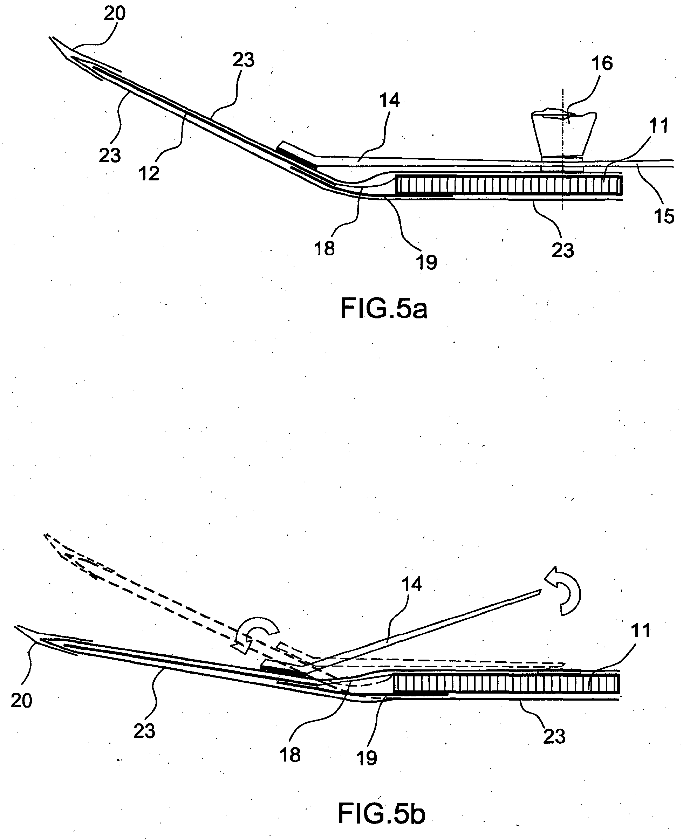

Les figures 5a et 5b illustrent à cet effet une vue détaillée d'un exemple de panneau central équipé des deux panneaux latéraux en position respectivement de stockage et en position déployée.

En position de stockage comme représenté en figure 5a, le levier 14 est pris en « pince » entre le point de gerbage 16 et le panneau central 11. Le panneau central 11 est par ailleurs relié au panneau latéral 12 par l'intermédiaire d'une lame de motorisation 19 et d'un cable de maintien 18, ces deux éléments permettant d'assurer les fonctions de guidage et de maintien pendant et après l'opération de déploiement de la structure. Le panneau latéral est par ailleurs avantageusement muni en son extrémité d'un joint à lèvre 20 permettant d'affiner le profil de l'extrémité du panneau latéral pour assurer une meilleure planéité des surfaces et éviter ainsi les piéges thermiques et réflexions solaires.

En position de structure déployée comme représenté en figure 4b, le point de gerbage 16 est libéré, venant par la même libérer le levier 14 et le panneau latéral 12.

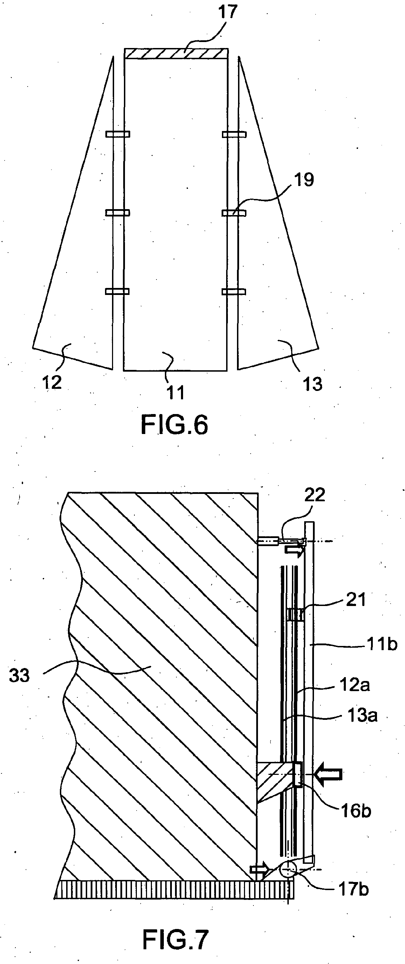

La figure 6 illustre une vue de dessus d'un exemple de panneau central 11 relié à deux panneaux latéraux 12 et 13 par l'intermédiaire de lames souples 19.

La figure 7 illustre une autre vue en coupe de la structure déployable d'écran solaire selon l'invention mettant en évidence la présence d'une articulation 17 qui solidarise le panneau central 11 b au niveau de la structure cylindrique tout en permettant le déploiement.

Avantageusement la structure déployable peut comprendre un ensemble de cales, permettant de limiter les débattements et améliorer la répartition des charges en phase de lancement. Plus précisément et à cet effet, la structure centrale cylindrique peut comprendre un doigt de maintien 22 maintenant le panneau central 11b en position fixe par rapport à la structure centrale cylindrique. Des petites cales inter-panneaux 21 peuvent également être prévues pour maintenir dans une position fixe les panneaux latéraux 12a et 13a contre le panneau central 11 et ainsi éviter tout battement destructeur. Des flêches illustrent les forces opposées exercées grâce au point de gerbage et à la cale 22, permettant de rigidifier l'ensemble au cours de la phase de lancement.

Avantageusement, l'ensemble des panneaux rigides peut être recouvert d'un matelas de protection thermique 23. Par ailleurs et selon l'art connu, la structure déployable assurant la fonction d'écran termique peut également être muni de cellules solaires (photovotaiques) permettant d'emmagasinée l'énergie solaire au niveau de ladite structure.

Le principe de structure déployable selon l'invention peut de manière plus générale être proposé dans tout type de structure déployable à éléments rigides devant être stockés dans un environnement contraint. Cette problématique se pose notamment dans le cas d' antenne, d'instruments, de capteurs,..., à déployer au bout d'un mât.

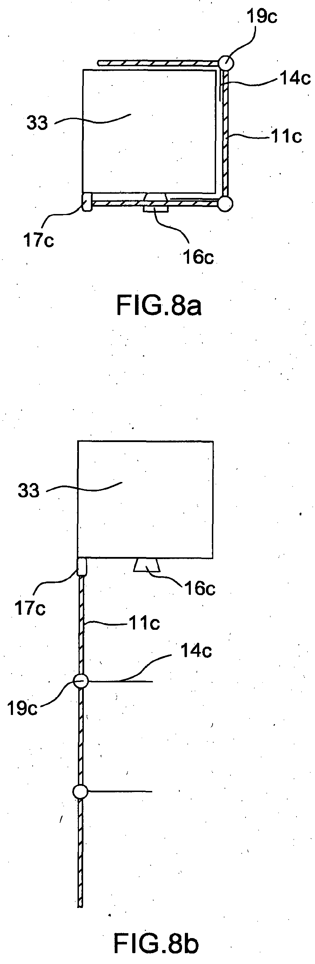

Ainsi selon une autre variante de l'invention, le module à déployer peut comprendre un ensemble de tronçons rigides 11c comme illustré en figure 8a, lesdits tronçons étant articulés entre eux.

Un premier tronçon est relié à la structure 33 par une articulation 17c et l'un des tronçons comprend au moins un point de gerbage 16c permettant de maintenir en position de stockage, l'ensemble du module autour de la structure centrale.

La figure 8b illustre le mât en position déployée. Selon cette variante de l'invention, le déploiement est réalisé selon un seul axe radial par rapport à la structure centrale 33.

De même que dans la première variante de l'invention décrite précédemment, les éléments unitaires constitués par les tronçons rigides 11 c sont reliés entre eux par des éléments guidant et motorisant 19c et des leviers 14c, pouvant typiquement être de même nature que ceux décrits précédemment. Avantageusement le mât peut être équipé en son extrémité libre par tout type de composant (antenne, capteur,..)

## Revendications

1. Structure déployable embarquable à bord d'un engin spatial comprenant une structure centrale (33), ladite structure déployable comportant au moins un module comprenant des éléments unitaires rigides (11,12,13) et équipé à son emplanture sur la structure satellite d'une articulation (17) permettant de déployer ledit module, la structure comprenant un ensemble de modules comportant chacun des panneaux comprenant une partie principale centrale (11a,11b) et deux parties latérales (12a,12b,13a,13b), seules les parties principales centrales étant fixées à la structure centrale et définissant une ligne d'articulation et de déploiement autour de ladite structure centrale , les modules comportant :
- des moyens de maintien en position de repli (14,15) des éléments unitaires autour de ladite structure satellite en position de stockage ; lesdits moyens comprenant des points de gerbage (16) solidarisant au moins un des éléments unitaires à la structure centrale, ledit point de gerbage étant actionnable de manière à pouvoir libérer ledit élément unitaire en cours de déploiement de la structure et des leviers de stockage (14, 15) interposés entre les parties principales centrales (11a, 11b) et les points de gerbage (116) en position de stockage;
- des moyens guidants et motorisants (18,19) maintenant les élements unitaires entre eux en position déployée, **caractérisée en ce que**:
ladite structure comprend au moins un premier et un second niveaux périphériques d'éléments unitaires (11, 12, 13), une partie centrale (11b) d'un élément unitaire du premier niveau étant relié par un point de gerbage (16b) à deux parties latérales (13a) d'un élément unitaire du second niveau.

2. Structure selon la revendication 1, **caractérisée en ce que** le point de gerbage (16) comprend un composant de libération de type : écrou pyrotechnique, coupe tirant, écrou low shock.

3. Structure selon l'une des revendications 1 ou 2, **caractérisée en ce que** lesdites parties latérales (12) sont reliées à la partie principale (11) par les moyens guidants et motorisants (18, 19) de manière à assurer un déploiement dans une direction quelconque par rapport à l'axe de la structure centrale (33).

4. Structure selon l'une des revendications 1 à 3, **caractérisée en ce que** les moyens guidants et motorisants (18, 19) comprennent d'une part des lames de motorisation et d'autre part des cables de maintien pour relier la partie centrale aux parties latérales.

5. Structure selon l'une des revendications 1 à 4, **caractérisée en ce qu'**elle comprend un module comportant plusieurs éléments unitaires et des moyens de déploiement périphérique autour de la structure centrale (33).

## Patentansprüche

1. Entfaltbare Struktur, die an Bord eines Raumfahrzeugs platziert werden kann, das eine zentrale Struktur (33) umfasst, wobei die entfaltbare Struktur wenigstens ein Modul umfasst, das starre einheitliche Elemente (11, 12, 13) umfasst und an seiner Basis an der Satellitenstruktur mit einem Gelenk (17) ausgestattet ist, das das Entfalten des Moduls zulässt, wobei die Struktur einen Satz von Modulen umfasst, die jeweils Platten mit einem zentralen Hauptteil (11a, 11b) und zwei lateralen Teilen (12a, 12b, 13a, 13b) umfassen, wobei nur die zentralen Hauptteile an der zentralen Struktur befestigt sind und eine Linie zum Zusammenklappen und Entfalten um die zentrale Struktur definieren, wobei die Module Folgendes umfassen:
Mittel (14, 15) zum Halten der einheitlichen Elemente in der gefalteten Position um die Satellitenstruktur, wenn sie in der Verstauposition sind; wobei die Mittel Stapelpunkte (16) umfassen, die wenigstens eines der einheitlichen Elemente fest mit der zentralen Struktur verbinden, wobei der Stapelpunkt betätigt werden kann, um das einheitliche Element beim Entfalten der Struktur zu lösen, und Verstauhebel (14, 15), die zwischen den zentralen Hauptteilen (11a, 11b) und den Stapelpunkten (16) in der Verstauposition positioniert sind;
Führungs- und Antriebsmittel (18, 19), die die einheitliche Elemente in der entfalteten Position zusammenhalten, **dadurch gekennzeichnet, dass**:
die Struktur wenigstens eine erste und eine zweite periphere Ebene von einheitlichen Elementen (11, 12, 13) umfasst, wobei ein zentraler Teil (11b) eines einheitlichen Elements der ersten Ebene durch einen Stapelpunkt (16b) mit zwei lateralen Teilen (13a) eines einheitlichen Elements der zweiten Ebene verbunden ist.

2. Struktur nach Anspruch 1, **dadurch gekennzeichnet, dass** der Stapelpunkt (16) eine Lösekomponente des Typs pyrotechnische Mutter, Zugschnitt, Low-Shock-Mutter umfasst.

3. Struktur nach einem der Ansprüche 1 oder 2, **dadurch gekennzeichnet, dass** die lateralen Teile (12) mit dem Hauptteil (11) durch Führungs- und Antriebsmittel (18, 19) verbunden sind, um ein Entfalten in jeder Richtung relativ zur Achse der zentralen Struktur (33) zu ermöglichen.

4. Struktur nach einem der Ansprüche 1 bis 3, **dadurch gekennzeichnet, dass** die Führungs- und Antriebsmittel (18, 19) einerseits Antriebsbänder und andererseits Halteseile zum Verbinden des zentralen Teils mit den lateralen Teilen umfassen.

5. Struktur nach einem der Ansprüche 1 bis 4, **dadurch gekennzeichnet, dass** sie ein Modul mit mehreren einheitlichen Elementen und Mittel zum peripheren Entfalten um die zentrale Struktur (33) umfasst.

## Claims

1. A deployable structure that can be placed on board a spacecraft comprising a central structure (33), said deployable structure comprising at least one module comprising rigid unitary elements (11, 12, 13) and being equipped, at the root of the satellite structure, with an articulation (17) that allows said module to be deployed, said structure comprising a set of modules each comprising panels comprising a central main part (11a, 11b) and two lateral parts (12a, 12b, 13a, 13b), with only the central main parts being fixed to said central structure and defining a line of articulation and deployment about said central structure, said modules comprising:
means (14, 15) for holding said unitary elements in the folded position about said satellite structure when in the stowed position; said means comprising stacking points (16) rigidly connecting at least one of said unitary elements to said central structure, said stacking point being able to be activated so as to be able to release said unitary element during the deployment of said structure, and stowage levers (14, 15) interposed between said central main parts (11a, 11b) and said stacking points (16) in the stowed position;
guiding and driving means (18, 19) holding said unitary elements together in the deployed position, **characterised in that**:
said structure comprises at least one first and one second peripheral level of unitary elements (11, 12, 13), with a central part (11b) of a unitary element of the first level being connected via a stacking point (16b) to two lateral parts (13a) of a unitary element of the second level.

2. The structure according to claim 1, **characterised in that** said stacking point (16) comprises a release component of the pyrotechnic nut, draw profile, low-shock nut type.

3. The structure according to any one of claims 1 or 2, **characterised in that** said lateral parts (12) are connected to said main part (11) by said guiding and driving means (18, 19) so as to provide deployment in any direction relative to the axis of said central structure (33).

4. The structure according to any one of claims 1 to 3, **characterised in that** said guiding and driving means (18, 19) comprise, on the one hand, drive strips and, on the other hand, retention cables for connecting said central part to said lateral parts.

5. The structure according to any one of claims 1 to 4, **characterised in that** it comprises a module comprising a plurality of unitary elements and means for peripheral deployment about said central structure (33).
